# EUROPEAN PATENT SPECIFICATION

(11) **EP 0 337 684 B1**
(45) Date of publication and mention of the grant of the patent: **19.07.1995**
(21) Application number: 89303478.5
(22) Date of filing: 07.04.1989
(51) Int. Cl.: G06K 19/06, G06F 1/04

(54) **Clock signal switching device of an IC card**
Taktschaltgerät einer IC-Karte
Dispositif de commutation d'horloge de carte à puce

(30) Priority: 09.04.1988 JP 87996/88
(43) Date of publication of application: 18.10.1989
(73) Proprietor: SHARP KABUSHIKI KAISHA, Osaka 545 (JP)
(72) Inventor: Katsutani, Masafumi, Tenri-shi Nara-ken (JP); Yaegawa, Kazuhiro, Nara-shi Nara-ken (JP)
(74) Representative: Brown, Kenneth Richard

(56) References cited:
- EP-A- 0 257 648
- FR-A- 2 596 897
- GB-A- 2 080 585
- US-A- 4 651 277
- IBM TECHNICAL DISCLOSURE BULLETIN. vol. 20, no. 11B, April 1978, NEW YORK US, pages 4889-4890; D. S. Garriss: "Switchable clock generator"
- IBM TECHNICAL DISCLOSURE BULLETIN. vol. 26, no. 10A, March 1984, NEW YORK US pages 5260 - 5261; M.D. Brown and D.D. Reetz: "Integrated LSSD clock and reset control"
- PATENT ABSTRACTS OF JAPAN vol. 10, no. 11 (E-374) 17 January 1986,& JP-A-60 173949 (FUJITSU KK) 07 September 1985,
- PATENT ABSTRACTS OF JAPAN vol. 11, no. 81 (E-488) 12 March 1987,& JP-A-61 236240 (NEC CORP.) 21 October 1986,

## Description

The present invention relates to a clock signal switching device for an IC card. More particularly, the present invention relates to a clock signal switching device for an IC card for switching from an internal clock signal to an external clock signal supplied from a terminal unit, whereby an IC card operable in response to the internal clock signal can operate in response to the external clock signal in place of the internal clock signal when the IC card is attached to the terminal unit.

IC cards provided with displays are utilized in various fields these days. Such an IC card is operable not only as a single card but also when attached to a terminal unit. For these purposes, an IC card contains a battery, an internal clock signal generating circuit for generating an internal clock signal, and a processing circuit and, when operated as a single card, the processing circuit operates in response to the internal clock signal.

When such a card is attached to a terminal unit, external power is supplied from the terminal unit to the IC card and an external clock signal is also supplied thereto. The processing circuit in the IC card operates in response to the external clock signal. Thus, switching between the clock signals is required to apply the internal clock signal when the IC card is to operate in the form of a single card and to apply the external clock signal when the IC card is attached to the terminal unit. For those purposes, it is necessary to determine whether the IC card is operated as a single card or it is connected to a terminal unit. Methods for such determination include a method of detecting a mechanical contact of an external terminal provided in the IC card, and a method of detecting a difference between the voltage of the battery contained in the IC card and that of the external power supplied when the card is attached to the terminal unit.

However, in view of the structure of an IC card in general, it is difficult to attach a detector to its external terminal for the purpose of detecting the above mentioned mechanical contact. The method of detecting the difference between the respective voltages cannot always be utilized, for example, in cases in which there is only a small difference between the voltage of the battery contained in the IC card and the voltage of the external power supply. This is because when noise is present when using the IC card as a single card, it is often erroneously determined that the card is attached to a terminal unit, thus causing errors in operation.

If an IC card is forcibly ejected from the terminal unit during communication of data between the card and the terminal unit, switching from the external clock signal to the internal clock signal occurs abruptly, causing a disorder in the program contained in the IC card.

FR-A-2 596 897 discloses an IC card comprising the features of the preamble of claim 1 which can be connected to a card terminal and can also be operated independently using a battery built in the IC card. The IC card includes a switching circuit arranged to select one of a clock signal supplied by the terminal and another clock signal of much lower frequency generated by an oscillator built in the IC card. The switching circuit detects power supplied from the terminal. When the power is detected, the switching circuit selects the clock signal supplied by the terminal. Such an arrangement is disadvantageous, since the switching operation presupposes that the clock signal is supplied to the IC card when the terminal power is detected, whereas, for example, a faulty or poor connection of the IC card to the terminal may prevent supply of the terminal clock signal to the IC card. In these circumstances, the circuitry of the IC card would receive no clock signal from either the terminal or the in-built oscillator, and would therefore not operate.

GB-A-2 080 585 discloses a semiconductor integrated circuit having a single clock signal scource consisting of an oscillator and a timing generator. When a battery voltage becomes unacceptably low, the operations of the oscillator and the timing generator are stopped to reduce power consumption. When the battery voltage recovers, the oscillator is re-started. However, in order to ensure stable operation, the timing generator is not restarted (and does not therefore output the clock signal) until a predetermined number of oscillation cycles has been counted by a counter.

The invention addresses at least some of the problems encountered in the prior art.

According to the present invention there is provided a portable electronic device having an internal clock source, means for receiving clock pulses from an external clock source, and switch means for switching a circuit of the device between a first mode in which the circuit is responsive to the internal clock source and a second mode in which the circuit is responsive to the external clock source, characterised in that the switch means is arranged to operate in response to reception of a predetermined number of the external clock pulses by the receiving means for switching the circuit from the first mode to the second mode and to operate in response to combined non-reception of the external clock pulses by the receiving means and reception of pulses from the internal clock source for a predetermined time period for switching the circuit from the second mode to the first mode.

This arrangement advantageously ensures that a clock signal is supplied to said circuit of the IC card irrespective of whether the IC card is utilized as a single card or is attached to a terminal unit.

Additionally, it can be correctly determined whether the IC card is operated as a single card or it is attached to a terminal unit.

Furthermore, by arranging that the switch means switches from the first mode to the second mode in response to the reception of a predetermined number of the external clock pulses, it can be ensured that the external clock signal input to the device will have stabilised by the time said predetermined number of external clock pulses have been received by said receiving means.

Also, by arranging that the switch means switches the circuit to the first mode in response to combined non-reception of external clock pulses by said receiving means and reception of pulses from the internal clock source for a predetermined period, an abrupt change from the external clock signal to the internal clock signal is avoided and disorder in the operation of the device is inhibited.

An embodiment of the present invention will now be described, by way of example only, with reference to the accompanying drawings.

Figs. 1A and 1B are block diagrams showing schematically the general construction of an IC card according to an embodiment of the present invention and a terminal unit.

Figs. 2A and 2B are specific circuit diagrams of the embodiment of the present invention.

Figs. 3, 4 and 5 are timing charts for explaining operation of the embodiment of the present invention.

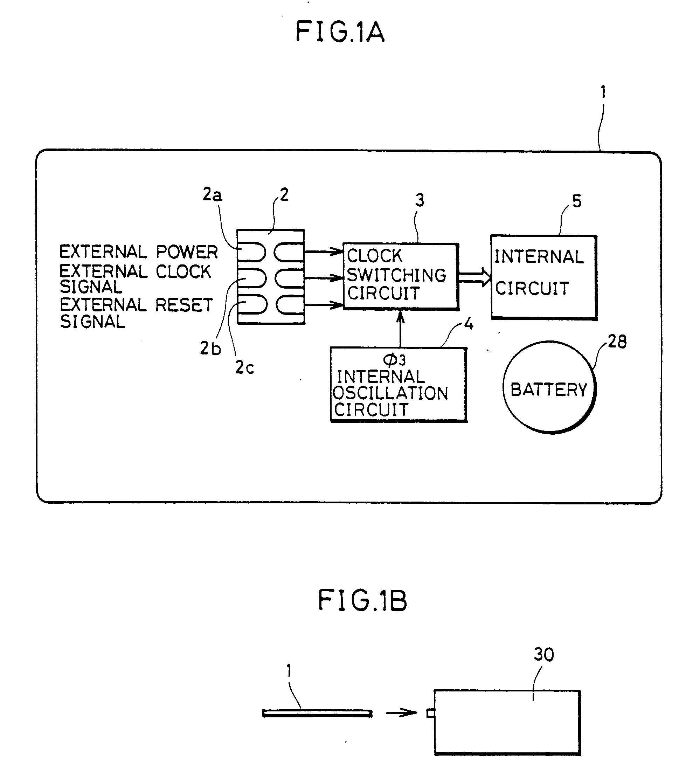

Figs. 1A and 1B are block diagrams showing an entire construction of an embodiment of the present invention.

Referring first to Figs. 1A and 1B, the construction of the embodiment of the invention will be described. An IC card 1 has an external terminal set 2. This external terminal set is used to electrically connect the IC card 1 to a terminal unit 30 when the card 1 is attached thereto. An external power, an external clock signal and an external reset signal are applied from the terminal unit 30 through respective terminals 2a, 2b and 2c of the external terminal set 2. Those external power, the external clock signal and the external reset signal are applied to a clock switching circuit 3. An internal oscillation circuit 4 is provided to generate an internal clock signal. The clock switching circuit 3 switches between an internal clock signal generated from the internal oscillation circuit 4 and the external clock signal inputted through the external terminal set 2 and applies the signal selected by the switching circuit to an internal circuit 5. When the IC card 1 is not attached to the terminal unit 30, electric power is supplied from a battery 28 to the clock switching circuit 3, the internal oscillation circuit 4 and the internal circuit 5.

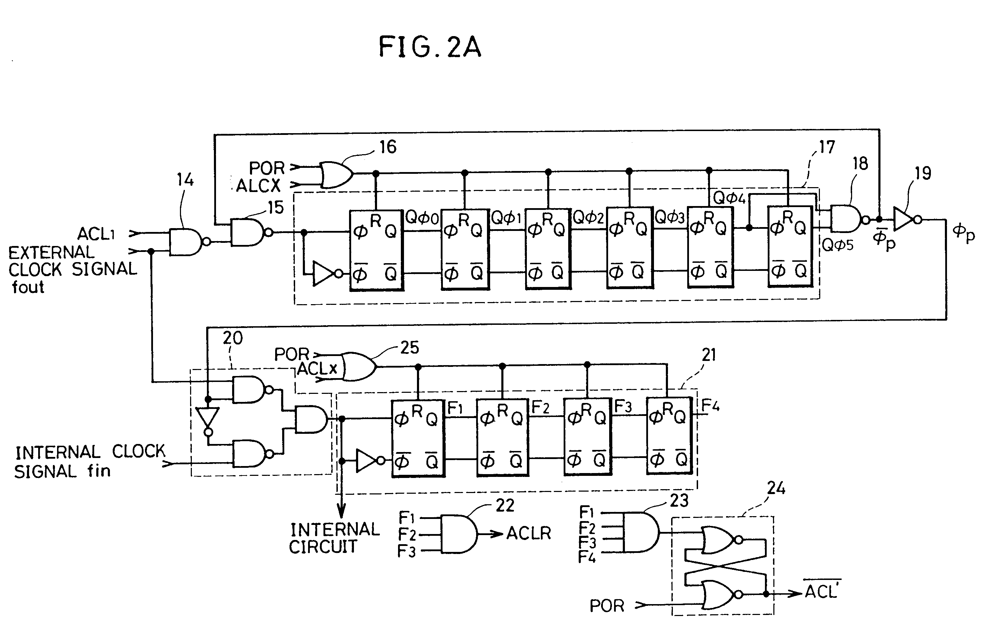

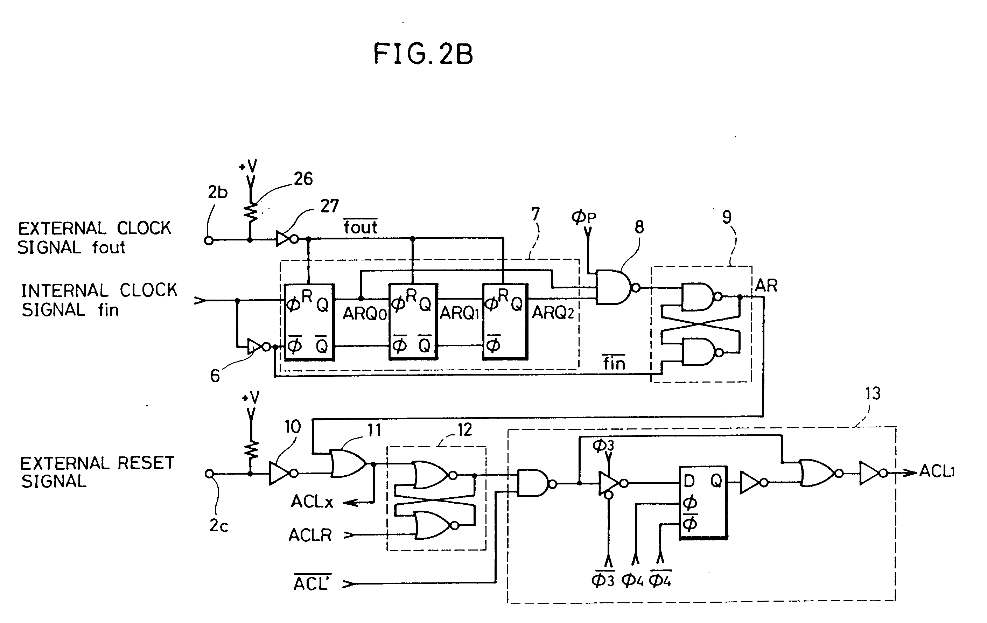

Figs. 2A and 2B are specific circuit diagrams of the embodiment of the invention.

Referring first to Fig. 2A, a counter 17 is provided to output signals Qφ4 and Qφ5 for outputting a signal φ̅p̅ of a low (L) level from a NAND gate 18 and a signal φp of a high (H) level from an inverter 19 in response to the count of a predetermined number of pulses of an external clock signal fₒᵤₜ. A switching circuit 20 is used to switch between an internal clock signal fᵢₙ and the external clock signal fₒᵤₜ in response to the signal φp, so that either clock signal is outputted as a system clock φ to the internal circuit 5 shown in Fig. 1 and to a counter 21. The counter 21 is provided to output signals F1 to F4 for forming timing signals ACLR and A̅C̅L̅′̅ by means of gates 22 and 23 and a latch circuit 24.

Referring to Fig. 2B, a counter circuit 7 is reset by an external clock signal f̅ₒ̅ᵤ̅ₜ̅, counts pulses of the internal clock signal fᵢₙ and generates timing signals ARQ0 to ARQ2 for forming a signal AR. A latch circuit 12 is latched by an external reset signal and it is reset by a signal ACLR which attains H level after several cycles from the switching from the internal clock signal fᵢₙ to the external clock signal fₒᵤₜ. A synchronizing circuit 13 is provided to generate a signal ACL1 which synchronizes the output of the latch circuit 12 with clock signals φ3 and φ4 generated from the system clock φ.

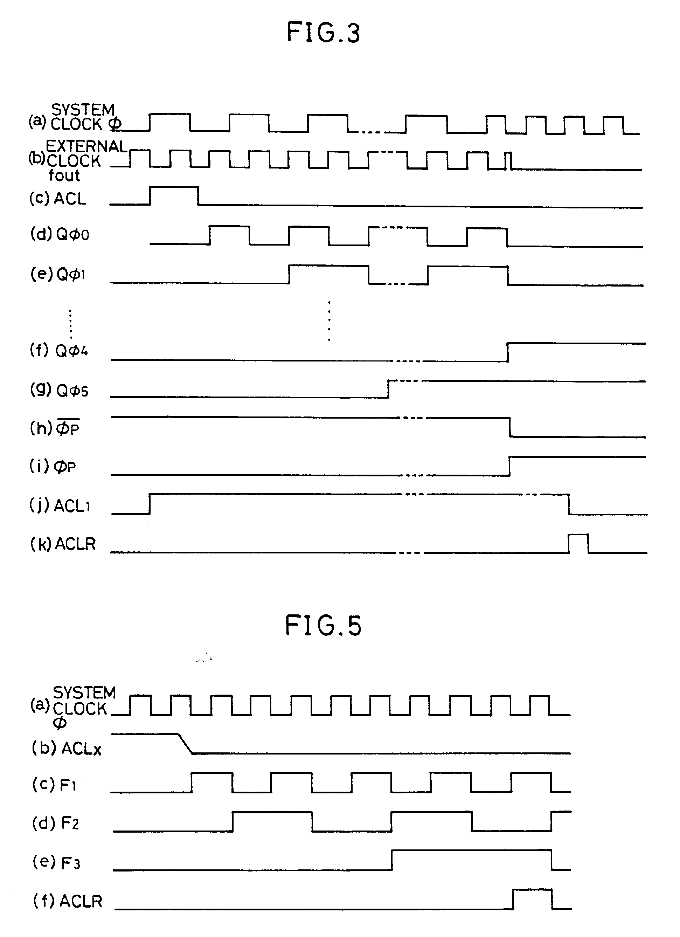

Figs. 3, 4 and 5 are timing charts for explaining a definite operation of this embodiment.

Referring to Figs. 2A to 5, the definite operation of the embodiment will be described. First, in the case of operating the IC card 1 singly without being attached to the terminal unit 30, a power supply switch (not shown) provided in the IC card 1 is operated and then a power-on reset signal POR is applied to a reset input terminal of the counter 17 through an OR gate 16 shown in Fig. 2A, whereby the counter 17 is reset. The power-on reset signal POR is also applied to the counter 21 through an OR gate 25, whereby the counter 21 is reset. In consequence, the outputs Qφ4 and Qφ5 of the counter 17 are lowered to L level and the respective outputs are supplied to the NAND gate 18. The signal φ̅p̅ outputted from the NAND gate 18 rises to H level and it is applied to one input terminal of the NAND gate 15. In consequence, this NAND gate 15 is opened. Further, the signal φ̅p̅ is inverted by the inverter 19 to the signal φp of L level, which is applied to the switching circuit 20. In response to this signal φp, the switching circuit 20 selects the internal clock signal fᵢₙ and outputs this signal as the system clock pulse φ to the internal circuit 5 shown in Fig. 1. Then, in response to the system clock pulse φ, the internal circuit 5 carries out predetermined operation.

Next, operation in the case of attaching the IC card 1 to the terminal unit 30 will be described. When the IC card 1 is attached to the terminal unit 30, the external power, the external clock signal fₒᵤₜ and the external reset signal are applied from the terminal unit 30 to the external terminal set 2 of the card 1. The external reset signal of L level is inverted by the inverter 10 as shown in Fig. 2B and it is supplied as the signal ACL of H level to the OR circuit 11 as shown in (c) of Fig. 3. The OR circuit 11 outputs a signal ACLx of H level and in response to this signal, the latch circuit 12 is latched. The output of the latch circuit 12 is supplied to the synchronizing circuit 13 and the synchronizing circuit 13 synchronizes the clock pulses φ3 and φ4 with the output of the latch circuit 12 and outputs the signal ACL1 as shown in (j) of Fig. 3. This signal ACL1 is applied to one input terminal of the NAND gate 14. As a result, the NAND gate 14 is opened. The external clock signal fₒᵤₜ as shown in (b) of Fig. 3 is applied to the other input terminal of the NAND gate 14. The external clock signal fₒᵤₜ is applied to the NAND gate 15 through the NAND gate 14.

At this time, the counter 17 is reset by the application of the signal ACLx outputted from the OR circuit 11 shown in Fig. 2B through the OR circuit 16 and, as shown in (f) and (g) of Fig. 3, the outputs Qφ4 and Qφ5 are respectively at L level. In consequence, the signal φ̅p̅ outputted from the NAND gate 18 rises to H level as shown in (h) of Fig. 3, so that the NAND gate 15 is opened. As a result, the external clock signal fₒᵤₜ is applied to the counter 17 through the NAND gate 15. The counter 17 starts counting pulses of the external clock signal fₒᵤₜ. When a predetermined number of pulses of the external clock signal fₒᵤₜ are counted, that is, when the outputs Qφ4 and Qφ5 of the counter 17 rise to H level, the signal φ̅p̅ outputted from the NAND gate 18 falls to L level, whereby the NAND gate 15 is closed. As a result, the external clock signal fₒᵤₜ is not applied to the counter 17. Thus, the counter 17 stops counting pulses of the external clock signal fₒᵤₜ.

On the other hand, the signal φ̅p̅ of L level is inverted by the inverter 19 to H level and the signal of H level is applied to the switching circuit 20. In response to the signal φ̅p̅, the switching circuit 20 outputs the external clock signal fₒᵤₜ as the system clock φ to the internal circuit 5. At the same time, the system clock φ is applied to the counter 21, so that the counter 21 outputs the timing signals F1 to F3 as shown in (c), (d) and (e) of Fig. 5. When all of the timing signals F1 to F3 attain H level, the AND gate 22 outputs the signal ACLR of H level as shown in (k) of Fig. 3 and (f) of Fig. 5 and the latch circuit 12 shown in Fig. 2B is reset by the signal ACLR. When the latch circuit 12 is reset, the synchronizing circuit 13 outputs the signal ACL1 falling to L level as shown in (j) of Fig. 3. The NAND gate 14 is closed by the signal ACL1 and the external clock signal fₒᵤₜ is not applied to the NAND 15.

The signal ACL1 is used to enable the internal circuit 5. More specifically, the internal circuit 5 is initialized in a period of H level of the signal ACL1 and after the signal ACL1 falls to L level, the internal circuit 5 operates. Thus, as shown in (j) of Fig. 3, since the signal ACL1 falls to L level after several cycles from the switching from the internal clock signal fᵢₙ to the external clock signal fₒᵤₜ, the internal circuit 5 operates stably and erroneous operation can be prevented.

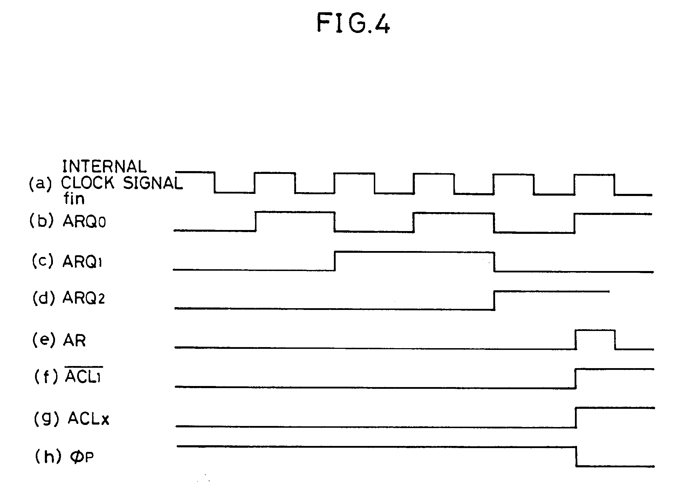

Referring now to the timing chart of Fig. 4, description will be made of the case in which the IC card 1 is forcedly removed from the terminal unit 30. When the IC card 1 is removed from the terminal unit 30, the external clock signal fₒᵤₜ is no longer applied. On this occasion, the input terminal for the external clock signal fₒᵤₜ is pulled up by a resistor 26 as shown in Fig. 2B and accordingly it is raised to H level. The signal of H level at this terminal is inverted by the inverter 27 and it is applied to the reset input terminal of the counter 7, whereby the counter starts counting pulses of the internal clock signal fᵢₙ shown in (a) of Fig. 4. When the signals ARQ0 and ARQ2 of the counter 7 both rise to H level and the signal φp rises to H level as shown in (b) and (d) of Fig. 4, the latch circuit 9 is latched and the signal AR outputted from the latch circuit 9 rises to H level as shown in (e) of Fig. 4. This signal AR is inputted to the OR circuit 11 and the signal ACLx outputted from the OR circuit 11 rises to H level as shown in (g) of Fig. 4, whereby the latch circuit 12 is latched.

When the signal ACLx rises to H level, the counters 17 and 21 shown in Fig. 2A are reset and the NAND gate 18 outputs the signal φ̅p̅ of H level, while the inverter 19 outputs the signal φp of L level as shown in (h) of Fig. 4. In consequence, the switching circuit 20 selects the internal clock signal fᵢₙ and outputs it to the internal circuit 5. Thus, when the IC card 1 is forcedly ejected from the terminal unit 30, switching occurs from the external clock signal fₒᵤₜ to the internal clock signal fᵢₙ and thereafter the signal ACL1 falls to L level, whereby the internal circuit 5 starts operation.

As described in the foregoing, according to the embodiment of the present invention, when the IC card is attached to a terminal unit, pulses of the external clock signal supplied from the terminal unit are counted and, in response to counting of a predetermined number of pulses of the external clock signal, the external clock signal is selected and outputted in place of the internal clock signal. Accordingly, it can be correctly determined whether the IC card is operated in the form of a single body or in the form attached to any terminal unit.

Although the present invention has been described and illustrated in detail, it is clearly understood that the same is by way of illustration and example only and is not to be taken by way of limitation, the scope of the present invention being defined by the terms of the appended claims.

## Claims

1. A portable electronic device having an internal clock source (4), means (2) for receiving clock pulses from an external clock source, and switch means (20) for switching a circuit (5) of the device between a first mode in which the circuit is responsive to the internal clock source and a second mode in which the circuit is responsive to the external clock source, characterised in that the switch means (20) is arranged to operate in response to reception of a predetermined number of the external clock pulses by the receiving means (2) for switching the circuit (5) from the first mode to the second mode and to operate in response to combined non-reception of the external clock pulses by the receiving means (2) and reception of pulses from the internal clock source for a predetermined time period for switching the circuit (5) from the second mode to the first mode.

2. A device as claimed in claim 1, including a battery (28) and to which device electric power and an external clock signal are applied from a terminal unit (30) when said device is attached to said terminal unit (30), and wherein said switch means (20) comprises clock signal counting means (17) for counting pulses of said external clock signal supplied when said device is attached to said terminal unit (30), and for selecting and outputting said external clock signal in place of said internal clock signal when said clock signal counting means (17) counts said predetermined number of pulses of said external clock signal.

3. A device as claimed in claim 2, further comprising input clock signal detecting means for detecting no input of said external clock signal and input of said internal clock signal, said switch means (20) further comprising means for outputting said internal clock signal in place of said external clock signal after said predetermined time period has elapsed from the first detection of no input of said external clock signal and input of said internal clock signal by said input clock signal detecting means.

4. A device as claimed in claim 2 or claim 3, wherein said circuit comprises a processing circuit (5), and said switch means (20) comprises determining means (18) for determining that said clock signal counting means (17) counts said predetermined number of pulses of said external clock signal, and enable signal generating means (21,22) for outputting an enable signal for enabling said processing circuit (5) to operate after a predetermined time period has elapsed from the determination of said predetermined number of pulses of the external clock signal by said determining means.

5. A device as claimed in claim 4, wherein said device includes a terminal (2c) for receiving an external reset signal for resetting said processing circuit (5), and said enable signal generating means includes means (13) for outputting said external reset signal as said enable signal in synchronization with said internal clock signal in response to the application of said external reset signal.

## Patentansprüche

1. Tragbare elektronische Vorrichtung mit einer internen Taktquelle (4), einer Einrichtung (2) zum Empfangen von Taktimpulsen von einer externen Taktquelle, und einer Umschalteinrichtung (20) zum Umschalten einer Schaltung (5) der Vorrichtung zwischen einem ersten Modus, in dem die Schaltung auf die interne Taktquelle anspricht, und einem zweiten Modus, in dem die Schaltung auf die externe Taktquelle anspricht, **dadurch gekennzeichnet, daß** die Umschalteinrichtung (20) so ausgebildet ist, daß sie so arbeitet, daß sie auf den Empfang einer vorgegebenen Anzahl von Impulsen des externen Takts durch die Empfangseinrichtung (2) die Schaltung (5) vom ersten Modus in den zweiten Modus umschaltet, und sie so arbeitet, daß sie dann, wenn für eine vorgegebene Zeitspanne keine externen Taktimpulse von der Empfangseinrichtung (2) empfangen werden und in Kombination damit Impulse von der internen Taktquelle empfangen werden, die Schaltung (5) vom zweiten Modus in den ersten Modus umschaltet.

2. Vorrichtung nach Anspruch 1, mit einer Batterie (28), wobei an die Vorrichtung elektrische Spannung und ein elektrisches Taktsignal von einer Endstelleneinheit (30) angelegt werden, wenn die Vorrichtung an der Endstelleneinheit (30) angebracht wird, und wobei die Umschalteinrichtung (20) eine Taktsignal-Zähleinrichtung (17) aufweist, zum Zählen der Impulse des externen Taktsignals, wie sie zugeführt werden, wenn die Vorrichtung an der Endstelleneinheit (30) angebracht ist, und zum Auswählen und zum Ausgeben des externen Taktsignals anstelle des internen Taktsignals, wenn die Taktsignal-Zähleinrichtung (17) die vorgegebene Anzahl von Impulsen des externen Taktsignals gezählt hat.

3. Vorrichtung nach Anspruch 2, ferner mit einer Eingangstaktsignal-Erkennungseinrichtung zum Erkennen fehlender Eingabe des externen Taktsignals und einer Eingabe des internen Taktsignals, wobei die Umschalteinrichtung (20) ferner eine Einrichtung zum Ausgeben des internen Taktsignals anstelle des externen Taktsignals aufweist, nachdem die vorgegebene Zeitspanne ab der ersten Erkennung fehlender Eingabe des externen Taktsignals und einer Eingabe des internen Taktsignals durch die Eingangstaktsignal-Erkennungseinrichtung verstrichen ist.

4. Vorrichtung nach Anspruch 2 oder Anspruch 3, bei der die Schaltung eine Verarbeitungsschaltung (5) ist und die Umschalteinrichtung (20) eine Ermittlungseinrichtung (18) zum Ermitteln, daß die Taktsignal-Zähleinrichtung (17) die vorgegebene Anzahl von Impulsen des externen Taktsignals zählt, und eine Freigabesignal-Erzeugungseinrichtung (21, 22) aufweist, um ein Freigabesignal zum Freigeben der Verarbeitungsschaltung (5) auszugeben, damit diese arbeitet, nachdem eine vorgegebene Zeitspanne ab der Ermittlung der vorgegebenen Anzahl von Impulsen des externen Taktsignals durch die Ermittlungseinrichtung verstrichen ist.

5. Vorrichtung nach Anspruch 4, die einen Anschluß (2c) zum Empfangen eines externen Rücksetzsignals zum Rücksetzen der Verarbeitungsschaltung (5) beinhaltet, wobei die Freigabesignal-Erzeugungsschaltung eine Einrichtung (13) zum Ausgeben des externen Rücksetzsignals als das genannte Freigabesignal synchron mit dem internen Signal auf das Anlegen des externen Rücksetzsignals aufweist.

## Revendications

1. Dispositif électronique portatif ayant une source d'horloge interne (4), des moyens (2) pour recevoir des impulsions d'horloge provenant d'une source d'horloge externe, et des moyens de commutation (20) pour faire commuter un circuit (5) du dispositif entre un premier mode dans lequel le circuit répond à la source d'horloge interne et un second mode dans lequel le circuit répond à la source d'horloge externe, caractérisé en ce que les moyens de commutation (20) sont agencés pour fonctionner en réponse à la réception d'un nombre prédéterminé d'impulsions d'horloge externe par les moyens de réception (2) de manière à faire commuter le circuit (5) du premier mode au second mode, et pour fonctionner en réponse en combinaison à la non-réception des impulsions d'horloge externe par les moyens de réception (2) et à la réception des impulsions provenant de la source d'horloge interne pendant une période de temps prédéterminée de manière à faire commuter le circuit (5) du second mode au premier mode.

2. Dispositif selon la revendication 1, incluant une batterie (28) et auquel sont appliqués une alimentation électrique de dispositif et un signal d'horloge externe en provenance d'un terminal (30) lorsque ledit dispositif est assemblé audit terminal (30), et dans lequel lesdits moyens de commutation (20) comprennent des moyens de comptage de signal d'horloge (17) pour compter des impulsions dudit signal d'horloge externe qui est fourni lorsque ledit dispositif est assemblé audit terminal (30), et pour sélectionner et délivrer ledit signal d'horloge externe à la place dudit signal d'horloge interne lorsque lesdits moyens de comptage de signal d'horloge (17) comptent ledit nombre prédéterminé d'impulsions dudit signal d'horloge externe.

3. Dispositif selon la revendication 2, comprenant également des moyens de détection de signal d'horloge d'entrée pour détecter une non-entrée dudit signal d'horloge externe et une entrée dudit signal d'horloge interne, lesdits moyens de commutation (20) comprenant également des moyens pour délivrer ledit signal d'horloge interne à la place dudit signal d'horloge externe après que ladite période de temps prédéterminée se soit écoulée par rapport à la première détection d'une non-entrée dudit signal d'horloge externe et d'une entrée dudit signal d'horloge interne par lesdits moyens de détection de signal d'horloge interne.

4. Dispositif selon la revendication 2 ou 3, dans lequel ledit circuit comprend un circuit de traitement (5), et lesdits moyens de commutation (20) comprennent des moyens de détection (18) pour détecter que lesdits moyens de comptage de signal d'horloge (17) comptent ledit nombre prédéterminé d'impulsions dudit signal d'horloge externe, et des moyens de génération de signal de validation (21, 22) pour délivrer un signal de validation afin d'autoriser ledit circuit de traitement (5) à fonctionner après qu'une période de temps prédéterminée se soit écoulée par rapport à la détection dudit nombre prédéterminé d'impulsions du signal d'horloge externe par lesdits moyens de détection.

5. Dispositif selon la revendication 4, dans lequel ledit dispositif inclut une borne (2c) pour recevoir un signal de remise à zéro externe pour remettre à zéro ledit circuit de traitement (5), et lesdits moyens de génération de signal de validation incluent des moyens (13) pour délivrer ledit signal de remise à zéro externe comme étant ledit signal de validation en synchronisme avec ledit signal d'horloge interne en réponse à l'application dudit signal de remise à zéro externe.
